# EUROPEAN PATENT SPECIFICATION

(11) **EP 2 250 223 B1**
(45) Date of publication and mention of the grant of the patent: **11.01.2017**
(21) Application number: 09709214.2
(22) Date of filing: 05.02.2009
(51) Int. Cl.: C09B 67/12, C09B 47/04, C07F 5/06, C07F 7/12, C09B 69/10

(54) **METHOD TO INCORPORATE COMPOUNDS INTO MATRICES**
VERFAHREN ZUR EINFÜGUNG VON VERBINDUNGEN IN MATRIZEN
PROCEDE D'INCORPORATION DE COMPOSES DANS DES MATRICES

(30) Priority: 06.02.2008 US 26720 P
(43) Date of publication of application: 17.11.2010
(73) Proprietor: Noar, Barry J., Solana Beach, CA 92075 (US)
(72) Inventor: Noar, Barry J., Solana Beach, CA 92075 (US)
(74) Representative: Bradley, Adrian
(86) International application number: PCT/US2009/033245
(87) International publication number: WO 2009/100239

(56) References cited:
- WO-A1-00/52101
- US-A- 5 916 481
- US-A- 6 060 598
- US-A1- 2006 027 138
- US-A1- 2008 006 177
- DATABASE WPI Week 200576 Thomson Scientific, London, GB; AN 2005-735174 XP002717633, -& CN 1 583 762 A (UNIV FUZHOU) 23 February 2005 (2005-02-23)
- BRASSEUR, N. ET AL.: 'Water-soluble aluminium phtahlocyanine-polymer conjugates for PDT:photodynamic activities and pharmacokinetics in tumour-bearing mice' BRITISH JOURNAL OF CANCER. vol. 80, 25 June 1999, pages 1533 - 1541, XP008139671
- LO, P. C. ET AL.: 'Preparation and photophysical properties of halogenated silicon(IV) phtahlocyanines substituted axially with poly(ethylene glycol) chains.' TETRAHEDRON LETTERS vol. 44, 24 February 2003, pages 1967 - 1970, XP004408847
- HOFMAN, J. W. ET AL.: 'Peripheral and Axial Substitution of Phthalocyanines with Solketal Groups: Synthesis and In Vitro Evaluation for Photodynamic Therapy.' JOURNAL OF MEDICINAL CHEMISTRY vol. 50, 05 April 2007, pages 1485 - 1494, XP008139664

## Description

### Related Patent Applications

This application claims benefit of priority under 35 U.S.C. §119(e) to Provisional Application No. 61/026,720, entitled "Method to Incorporate Compounds into Matrices", filed February 6, 2008.

### Technical Field

The invention relates to a method to deposit substances, particularly water insoluble organic molecules, into matrices. More particularly, it concerns forming a transiently water soluble complex with the molecule to be incorporated and dissociating the complex, when the molecule is deposited.

### Background Art

Water insoluble organic molecules, such as organic dyes, are currently incorporated into matrices, such as silica beads, glass beads, latex particles, textiles, plastics and the like by first dissolving the molecule in organic solvents and then mixing with the supporting matrix or by solubilizing them in water through covalently bonded substituents which confer water solubility, but which remain as part of the molecules after the association with the matrix has occurred. The first approach is inherently disadvantageous, since the use of organic solvents generally should be avoided if possible. The second approach may result in the organic molecule leaching away from the matrix when it contacts aqueous environments.

The present invention provides a superior method to effect deposition of water insoluble organic molecules into matrices by conferring transient water solubility and then causing these molecules to revert to insoluble materials once deposited in the matrix. The method is environmentally friendly since no organic solvents are employed (green chemistry) and is particularly useful in photodynamic therapy, where the matrix is actually diseased tissue, or in biomedical assays, where the matrix may be microparticles or nanoparticles.

### Disclosure of the Invention

The invention is directed to a method according to claim 1. The method confers transient solubility on water insoluble organic molecules, especially dyes. The method of the invention requires that the organic molecule be able to sequester a metal in a manner such that the valence capacity of the metal is not exhausted and the metal remains able to form bonds with a water solubilizing moiety comprising a ligand containing an electron donor atom such as oxygen, nitrogen and sulfur. Examples of such ligands would be polyethylene glycol and polyethyleneimine. Such molecules are commonplace in many contexts and include, for example, porphyrins and phthalocyanine dyes. In a further aspect the invention provides a method according to claim 9.

The water insoluble organic molecule, such as a dye, containing a suitable metal is reacted with a water soluble ligand to obtain an initial water soluble complex. The complex may then be dissolved in water and mixed with the matrix material, such as polystyrene beads, and refiuxed or otherwise agitated to associate the complex with the matrix. This treatment subsequently dissociates the complex and deposits the organic molecule into or onto the matrix. Excess complex is removed with water.

Thus, there is provided a method to confer transient water solubility on a metal ion-containing water insoluble organic molecule, which method comprises reacting said molecule with a water soluble ligand under conditions wherein said ligand associates with said molecule to form a complex between said ligand and said molecule, and recovering the complex by treating with water to dissolve the complex.

Also provided is a complex formed by the method described above.

Also provided is a method to deposit a water insoluble metal-containing organic molecule onto or into a matrix, which method comprises treating said matrix with the complex described above under conditions wherein said complex dissociates to deposit said metal-containing organic molecule onto or into said matrix and recovering the matrix containing the organic molecule by solubilizing the dissociated ligand in water.

### Brief Description of the Drawings

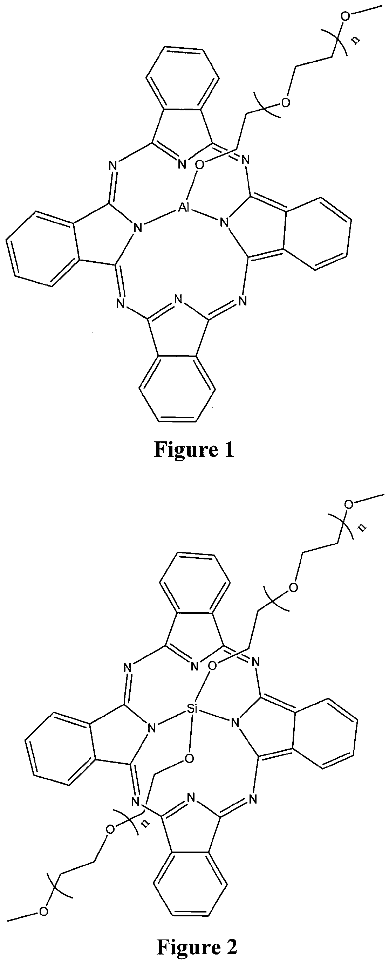

Figures 1 and 2 show typical complexes produced according to the invention; Figure 1 shows a phthalocyanine in association with a single ligand when aluminum is the coordinating metal; Figure 2 shows a phthalocyanine in association with two ligands when silicon is the coordinating metal.

### Modes of Carrying Out the Invention

The invention provides the formation of a transiently water soluble complex between a metal-coordinated water insoluble organic molecule, such as a dye, with a water soluble ligand. Typically, the metals contained in such molecules are aluminum, gallium, indium, silicon, germanium, tin, iron, phosphorus, platinum, and any other metal that can achieve an oxidation state of at least +3, in those cases where coordination complexes are formed in which the metal is complexed with coordinating heteroatoms such as nitrogen, oxygen or sulfur. Suitable organic molecules that can accommodate such metals coordinated to heteroatoms include derivatives of porphyrins, homoporphyrins, chlorins, corroles, porphycenes, purpurins, sapphyrins, texaphyrins, phthalocyanines, naphthalocyanines, anthracyanines, and other macrocycles. These dyes are typically insoluble in water. The metal-containing forms of these are those where a metal is coordinated by virtue of electron-donating atoms with a metal ion. These are thus metal-coordinated forms. Such coordinated forms are common in the art, and are commercially available.

A transient complex is formed by reacting, optionally with heat, the metal containing organic molecule with a water soluble ligand such as polyethylene glycol derivatives, polyethyleneimine, polyvinyl alcohol and the like. In a typical procedure, the organic molecule is mixed with an excess of the ligand and heated to effect the association. The resulting complex can be recovered, for example, by chromatographic methods.

The complex itself is an association between the ligand and the metal coordinated to the organic molecule to the extent permitted by the valence of the metal. Typical such complexes are shown in Figures 1 and 2.

Once formed, the complex can readily be dissolved in water and mixed with the desired matrix for depositing thereon. Suitable matrices include beads or particles such as latex or silica beads or particles, colloidal gold particles, quantum dots, and other solids such as textiles, plastics, particulate supports in inks and paints, paper or cellulose, glass fiber structures and the like.

The complex and the matrix are mixed and treated so as to effect deposition of the insoluble form of the organic molecule onto the support. This deposition is effected by dissociating the complex and liberating the water soluble ligand which then can be washed away with water. Typical conditions, which effect this dissociation and deposition, include vortexing, sonication, refluxing, and the like. The matrix, then, contains a relatively permanent deposit of the organic molecule.

In slightly more detail, the water soluble ligand is associated with the metal-coordinated water insoluble organic compound by mixing these components in the absence of solvent and heating to a sufficient temperature for a sufficient time to effect formation of the complex. The temperatures and times will vary with the nature of the components of the reaction mixture, however, typical temperatures are in the range of 200-350°C, preferably 250-300°C. Suitable times are from a half an hour or less to several days. The exact conditions advantageous for a particular set of reactants is readily optimized.

Once the complex is formed, it may be recovered chromatographically, or the crude reaction mixture can simply be dissolved in aqueous solution for application to a solid matrix.

The complex recovered from chromatography or other purification procedures and dissolved in water is then used to treat the solid matrices. If the matrix is particulate, agitation or stirring may be employed. The period of contact will vary from several minutes to a few hours to several days. Even where larger macroscopic matrices are employed, such as textiles, agitation may be advantageous.

When sufficient contact time has been effected, the water soluble ligand is dissociated from the matrix by agitation, refluxing, sonication, microfluidization, or other means as appropriate. Where such dissociation occurs *in vivo*, the dissociation occurs spontaneously to permit the metal-coordinated insoluble compound to be associated with tissue or cellular components. Once dissociated, the water soluble ligand is readily separated from the matrix.

In *in vitro* situations, this separation may involve centrifugation, filtration, or simple decanting. Rinsing may be required.

### Applications of the Soluble Complex and Matrix Deposition

In one application, the soluble complex is used as the active drug in photodynamic therapy. In this procedure, a light-sensitive drug (typically a dye of the type discussed) is administered to a patient, either intravenously or topically. Within a period of two to three days, the dye selectively concentrates in diseased cells (particularly tumor cells) while largely clearing from normal tissue. The diseased tissue is then irradiated with light, which is absorbed by the dye, thus providing excitation of the dye. As the dye fluoresces, it reacts with other substrates, mainly molecular oxygen, to generate highly cytotoxic species, including singlet oxygen, superoxide anion and hydroxyl radicals, which cause irreversible damage to the diseased cells.

In the foregoing application, the transiently soluble complexes produced according to the invention allow for an enhanced, non-immunogenic, water soluble transport medium for administration, obviating the need for disadvantageous formulations. For example, association with liposomes or other lipid-based carriers may not be desirable. Permanent water solubilizing chemistry employing covalent attachments is disadvantageous due to poor transport across the cell membrane. The complexes of the invention also permit the dye to be immobilized, and thus maintained, in the diseased cells. This improved deposition of the dye leads to prolonged singlet oxygen generation and more efficient destruction of the diseased tissue.

Other applications include assay labels and probes, fluorescence polarization immunoassays, chemical sensors, photosynthetic antenna arrays, catalysts, contrast agents, photo detection agents and imaging agents. Still other applications include various types of organic and molecular electronics components including semiconductors and display devices, photoconductors, organic light-emitting diodes, optical recording disks, and the like.

Transiently soluble complexes produced according to the invention are contemplated for coating substrates for therapeutic use. Suitable substrates could be biomedical devices such as coronary stents for the treatment of plaque and prevention of restenosis by vascular photodynamic therapy, and textiles such as bandages for prevention of infection and accelerated wound healing.

With regard to textiles, transiently soluble complexes produced according to the invention are suited for dyeing or printing fibrous materials consisting of wool, silk or linear polyamides (e.g., nylon), in particular materials containing hydroxyl groups, for example, cellulose, such as linen, regenerated cellulose, especially cotton and leather. The dyeing and prints obtained on these materials are distinguished by deep tints and good fastness properties to light and to wetting.

Other types of material are also suitable substrates for transiently water soluble complexes of the invention such as paints, coatings, printing inks, rubber products, paper, plastics, ceramics and detergents.

Antimicrobial uses of transiently soluble complexes produced according to the invention are contemplated to reduce levels of harmful or pathogenic microorganisms by generation of photosensitized singlet oxygen. Potential applications include blood sterilization, virus inactivation and the destruction of bacteria in drinking water. An additional application includes oxidative degradation of dissolved or dispersed organic pollutants. The photosensitized detoxification of industrial and urban wastewaters using sunlight is gaining increasing interest because the use of solar energy in the treatment of wastewater could be an economical solution to a difficult environmental problem. Additional uses are as varied as disinfection and algaecidal action such as in swimming pools, food preservation in the form of dye coated plastic wrap and clothing which prevents infection.

Transiently soluble complexes produced according to the invention are contemplated for use in sunlight activated herbicides and insecticides. Photodynamic herbicides cause the undesirable accumulation of chlorophyll and heme metabolic intermediates (tetrapyrroles) in green plants. When exposed to light, the accumulated tetrapyrroles become photosensitizers for the production of singlet oxygen which kills the plants. The herbicide is [delta]-aminolevulinic acid which is a precursor of all tetrapyrroles in plant and animal cells. This has led to the study of singlet oxygen generating photosensitizers for use as insecticides. Transiently water soluble complexes produced according to the invention allow for superior insecticidal activity since permanently highly water soluble photosensitizers are inefficient photoinsecticides.

The versatility and high degree of stereoselectivity of the photosensitized singlet oxygen generated by the dye make it a useful synthetic reagent in fine chemical synthesis. The immobilization of the dye by its deposition into a matrix by way of a transiently water soluble complex enables it to be employed in a number of solvents, allowing flexibility in fine chemical synthesis.

Transiently soluble complexes produced according to the invention are contemplated for photo cosmetic procedures such as treatment of acne, hair removal (where photosensitizers tend to localize in the follicular epithelium) and tattoo removal. In tattoo removal, lasers are employed to fragment the tattoo ink in a process called photothermolysis. The fragmented ink particles are subsequently engulfed and absorbed by macrophages in a process called phagocytosis. This procedure is not only expensive, since it requires multiple exposures to the laser light, but also painful, often requiring local anesthesia. In addition, certain colors of tattoo inks are not as susceptible to photothermolysis, resulting in incomplete tattoo removal. Deposition of a photosensitizer into the tattoo ink and subsequent generation of singlet oxygen using ordinary light may initiate fragmentation of the tattoo ink for subsequent phagocytosis by macrophages.

Transiently soluble complexes produced according to the invention are also useful for optical recording media dyes for CD-R media. A thin layer of dye on the disk melts under the recording laser light and is ultimately transformed into stored data. Phthalocyanine dyes appear transparent on gold media, but light green on silver media, and although the actual color of the dye can be light green, they are often referred to as "gold dye", "gold on silver" or "silver on silver". Phthalocyanine dyes appear to be less sensitive to degradation from ordinary light such as ultraviolet (UV), fluorescence and sunshine. Due to their durability, phthalocyanines can also be used in applications relating to molecular circuitry. The transiently soluble complexes produced according to the invention can be deposited advantageously without the use of organic solvents.

Transiently soluble complexes produced according to the invention are also useful for optical display and imaging applications relating to optical data storage or processing. Aerogels and xerogels represent a novel class of nanoporous materials with remarkable optical, electronic, thermal, and structural properties. Many of these properties are ideal for host matrices in which luminescent materials are incorporated for light-emitting applications such as flat panel displays. Some of these properties include low weight, minimal optical and electronic interaction with the chromophore, desirable electron transport properties, and physical robustness. Inorganic or hybrid (organic-inorganic) xerogels can be doped with transiently soluble complexes of the invention such as phthalocyanine molecules. A xerogel is a dried gel produced from precursor molecules containing a silicon atom (tetra-ethoxysilanes and derivatives). The sol-gel process realizes an inorganic polymerization at room temperature of a silicate glass in which the permanent trapping of an organic molecule is easy without a chance to destroy it by an excessive temperature. This novel microstructure allows the attractive phenomenon of electron multiplication and affords the potential for efficient and bright electroluminescence.

In addition, the ligand, such as polyethyleneimine, which contains a reactive terminal amino group, may be coupled using standard linkage chemistry to additional moieties, such as antibodies, oligonucleotides, and proteins. For example, for use in photodynamic therapy, the dye can be coupled through the ligand to an antibody that is directed to the tumor. Dissociation of the ligand in the location of the tumor then results in deposition of the dye.

The following examples are intended to illustrate but not to limit the invention.

### Example 1

### Synthesis of an Aluminum Phthalocyanine / PEG Methyl Ether Complex

A mixture of aluminum phthalocyanine chloride (575 mg) and pre-dried polyethylene glycol monomethyl ether - MW1000 (5.0 g) is heated on a silicone oil bath at >300°C with stirring for 30 minutes. A dark blue molten mixture is formed and allowed to cool. The mixture is chromatographed on a silica gel (200-400 mesh) column equilibrated in methylene chloride and eluted with methylene chloride / methanol 1:1. The product elutes as an intense blue band. The product containing the eluate is evaporated under vacuum on a rotary evaporator to afford 950 mg of the complex as a dark blue solid.

### Example 2

### Absorption of the Complex on Polystyrene Microparticles

A suspension of 0.5 µ polystyrene latex particles in water at 5% solids is treated with the complex obtained from Example 1 in an amount to obtain the desired dye concentration and refluxed with stirring for 30 minutes. The suspension is then centrifuged at 14,000 rpm for 30 minutes and the supernatant discarded. The residue is treated with water, vortexed and re-centrifuged, again discarding the supernatant. The microparticles are stained blue.

### Example 3

### Assay of Dye Absorption

In order to assess the amount of dye associated with the matrix, the dyed matrix of Example 2 is extracted with DMSO and the quantity of dye in the extract determined by optical absorbance using a UV-VIS spectrophotometer.

### Example 4

### Synthesis of an Aluminum Phthalocyanine / PEG Complex

A mixture of aluminum phthalocyanine chloride (575 mg) and pre-dried polyethylene glycol - MW 1000 (5.0 g) is heated on a silicone oil bath at >290 °C with stirring for 3 hours. The resulting dark blue molten mixture is allowed to cool and chromatographed on a neutral alumina column equilibrated in methylene chloride and eluted with methylene chloride / methanol 1:1. The product elutes as an intense blue band. The product containing the eluate is evaporated under vacuum on a rotary evaporator to afford 850 mg of the complex as a dark blue solid.

### Example 5

### Adsorption of the Complex on Glass Beads

A slurry of 50 -100 µ silanized glass beads in water is treated with the complex obtained from Example 4 in an amount to obtain the desired dye concentration and vortexed for 5 minutes. The beads are filtered, washed with water and dried under vacuum. The beads are stained blue.

### Example 6

### Synthesis of a Silicon Phthalocyanine / PEG Complex

A mixture of silicon phthalocyanine dichloride (610 mg) and pre-dried polyethylene glycol - MW 1000 (5.0 g) is heated on a silicone oil bath at >300°C with stirring for 30 minutes. A dark blue molten mixture is formed and allowed to cool. The mixture is chromatographed on a neutral alumina column equilibrated in methylene chloride and eluted with methylene chloride / methanol 1:1. The product elutes as an intense blue band. The product containing the eluate is evaporated under vacuum on a rotary evaporator to afford 1.42 g of the complex as a dark blue solid.

### Example 7

### Adsorption of the Complex on Gold Nanoparticles

A rapidly stirring solution of 10 - 20 nm gold nanoparticles at 0.1% solids is treated with an aqueous solution of the complex obtained from Example 6 in an amount to obtain the desired dye concentration and stirred for 30 minutes. The dark red solution is filtered through a 0.45 µ polycarbonate filter and purified by gel-filtration chromatography to afford the dyed gold nanoparticle solution.

### Example 8

### Assay of Dye Adsorption

The concentration of dye adsorbed on the surface of the gold nanoparticles of example 7 is determined by fluorescence spectroscopy using a standard calibration curve.

## Claims

1. A method for the preparation of a water soluble complex from a metal-coordinated water-insoluble organic molecule selected from a metal-coordinated porphyrin, homoporphyrin, chlorin, corrole, porphycene, purpurin, sapphyrin, texaphyrin, phthalocyanine, naphthalocyanine or an anthracyanine which method comprises heating said metal-coordinated molecule with a water-soluble ligand selected from a polyethylene glycol, a polyethylene glycol derivative, a polyethyleneimine or a polyvinyl alcohol in the absence of solvent, and recovering the complex.

2. The method of claim 1, wherein said heating is at a temperature of from 200 to 350 °C.

3. The method of any preceding claim, wherein the water soluble ligand is a polyethylene glycol or a polyethylene glycol derivative.

4. The method of any preceding claim, wherein the metal-coordinated molecule is a phthalocyanine or a naphthalocyanine.

5. The method of any preceding claim, wherein the metal is selected from the group consisting of aluminium, gallium, indium, silicon, germanium, tin, iron, phosphorous or platinum.

6. The method of claim 5 wherein the metal is selected from aluminium or silicon.

7. The method of any preceding claim, wherein said recovering is by chromatographic methods.

8. The method of any preceding claim, wherein said recovering is by dissolution in water.

9. A method to deposit a water-insoluble metal-coordinated organic molecule onto or into a matrix which method comprises contacting said matrix with a complex prepared according to claim 1 and providing conditions wherein said complex dissociates thus depositing said metal ion-containing organic molecule in or on said matrix, and recovering the matrix containing the organic molecule by solubilizing the dissociated ligand in water.

10. The method of claim 9, wherein said conditions comprise one or more of vortexing, sonication, or refluxing.

11. The method of claim 9 or 10, wherein said matrix comprises beads, particles, textiles, plastics, paper, ceramics, organic tissue or glass fiber structures.

## Patentansprüche

1. Verfahren zur Herstellung eines wasserlöslichen Komplexes aus einem Metallkoordinierten, wasserunlöslichen, organischen Molekül, ausgewählt aus einem Metallkoordinierten Porphyrin, Homoprophyrin, Chlorin, Corrol, Porphycen, Purpurin, Sapphyrin, Texaphyrin, Phtalocyanin, Naphthalocyanin oder einem Anthracyanin, wobei das Verfahren das Erwärmen des Metall-koordinierten Moleküls mit einem wasserlöslichen Liganden, ausgewählt aus einem Polyethylenglycol, einem Polyethylenglycolderivat, einem Polytheylenimin oder einem Polyvinylalkohol, in Abwesenheit eines Lösungsmittels, und Gewinnen des Komplexes umfasst.

2. Verfahren nach Anspruch 1, wobei das Erwärmen bei einer Temperatur von 200 bis 350°C stattfindet.

3. Verfahren nach einem der vorhergehenden Ansprüche, wobei der wasserlösliche Ligand ein Polyethylenglycol oder ein Polyethylenglycolderivat ist.

4. Verfahren nach einem der vorhergehenden Ansprüche, wobei das Metall-koordinierte Molekül ein Phtalocyanin oder Naphthalocyanin ist.

5. Verfahren nach einem der vorhergehenden Ansprüche, wobei das Metall ausgewählt ist aus der Gruppe, bestehend aus Aluminium, Gallium, Indium, Silicium, Germanium, Zinn, Eisen, Phosphor oder Platin.

6. Verfahren nach Anspruch 5, wobei das Metall ausgewählt ist aus Aluminium oder Silicium.

7. Verfahren nach einem der vorhergehenden Ansprüche, wobei das Gewinnen durch chromatographische Verfahren stattfindet.

8. Verfahren nach einem der vorhergehenden Ansprüche, wobei das Gewinnen durch Lösen in Wasser stattfindet.

9. Verfahren zum Abscheiden eines wasserunlöslichen, Metall-koordinierten, organischen Moleküls auf oder in eine Matrix, wobei das Verfahren das in Kontakt bringen der Matrix mit einem nach Anspruch 1 hergestellten Komplex und das Bereitstellen von Bedingungen, worin der Komplex dissoziiert, wodurch das das Metallion-enthaltende organische Molekül in oder auf der Matrix abgeschieden wird, und das Gewinnen der das organische Molekül enthaltenden Matrix, indem der dissoziierte Ligand in Wasser aufgelöst wird, umfasst.

10. Verfahren nach Anspruch 9, wobei die Bedingungen eines oder mehrere von Mischen mit einem Vortex, Ultraschallbehandlung oder Rückflusskochen umfasst.

11. Verfahren nach Anspruch 9 oder 10, wobei die Matrix Kügelchen, Partikel, Textilien, Kunststoffe, Papier, Keramik, organisches Gewebe oder Glasfaserstrukturen umfasst.

## Revendications

1. Procédé de préparation d'un complexe soluble dans l'eau à partir d'une molécule organique insoluble dans l'eau, associée à un métal, choisie parmi une porphyrine associée à un métal, une homoporphyrine, une chlorine, un corrole, un porphycène, une purpurine, une sapphyrine, une texaphyrine, une phtalocyanine, une naphtalocyanine ou une anthracyanine, lequel procédé comprend le chauffage de ladite molécule associée à un métal avec un ligand soluble dans l'eau choisi parmi un polyéthylèneglycol, un dérivé de polyéthylèneglycol, une polyéthylèneimine ou un alcool polyvinylique en l'absence de solvant, et la récupération du complexe.

2. Procédé selon la revendication 1, dans lequel ledit chauffage s'effectue à une température comprise entre 200 à 350 °C.

3. Procédé selon l'une quelconque des revendications précédentes, dans lequel le ligand soluble dans l'eau est un polyéthylèneglycol ou un dérivé de polyéthylèneglycol.

4. Procédé selon l'une quelconque des revendications précédentes, dans lequel la molécule associée à un métal est une phtalocyanine ou une naphtalocyanine.

5. Procédé selon l'une quelconque des revendications précédentes, dans lequel le métal est choisi parmi le groupe constitué d''aluminium, gallium, indium, silicium, germanium, étain, fer, phosphore ou platine.

6. Procédé selon la revendication 5, dans lequel le métal est choisi parmi l'aluminium et le silicium.

7. Procédé selon l'une quelconque des revendications précédentes, dans lequel ladite récupération s'effectue par des procédés chromatographiques.

8. Procédé selon l'une quelconque des revendications précédentes, dans lequel ladite récupération s'effectue par dissolution dans l'eau.

9. Procédé de dépôt d'une molécule organique insoluble dans l'eau, associée à un métal, sur ou dans une matrice, lequel procédé comprend la mise en contact de ladite matrice avec un complexe préparé selon la revendication 1, et la mise en oeuvre de conditions dans lesquelles ledit complexe se dissocie en déposant ainsi ladite molécule organique contenant des ions métalliques dans ou sur ladite matrice, et la récupération de la matrice contenant la molécule organique en solubilisant le ligand dissocié dans l'eau.

10. Procédé selon la revendication 9, dans lequel lesdites conditions comprennent un ou plusieurs éléments suivants : mélange au vortex, sonication ou reflux.

11. Procédé selon la revendication 9 ou 10, dans lequel ladite matrice comprend des perles, des particules, des textiles, des matières plastiques, du papier, des céramiques, du tissu organique ou des structures en fibres de verre.
